# EUROPEAN PATENT SPECIFICATION

(11) **EP 0 894 687 B1**
(45) Date of publication and mention of the grant of the patent: **04.12.2002**
(21) Application number: 98116504.6
(22) Date of filing: 15.03.1995
(51) Int. Cl.: B60T 11/16, B60T 11/236, F16D 25/12, B60T 11/22

(54) **Hydraulic actuating system**
Hydraulische Betätigungseinrichtung
Système d'actionnement hydraulique

(30) Priority: 16.03.1994 GB 9405124
(43) Date of publication of application: 03.02.1999
(62) Divisional of application: 95913126.9
(73) Proprietor: AUTOMOTIVE PRODUCTS FRANCE S.A., 95520 Herblay-Cergy-Pontoise (FR)
(72) Inventor: Tobiasz, Andre, 93800 Epinay-sur-Seine (FR)
(74) Representative: Morrall, Roger

(56) References cited:
- EP-A- 0 146 283
- WO-A-87/03344
- WO-A-92/15474
- DE-A- 3 816 608
- FR-A- 2 686 659

## Description

This invention relates to hydraulic actuating systems and in particular to actuating cylinders for use in such systems.

It is known to provide actuating cylinders for hydraulic actuating systems in which a piston is axially displaceable in sealed sliding contact with an associated bore. In such known actuating cylinders, sealing between the piston and the bore is achieved by means of a rubber seal located on a peripheral diameter of the piston and which contacts the associated bore to provide a sliding seal.

Unfortunately, sealing arrangements of this type are prone to a stick-slip effect which can lead to seal squeak and judder. It is an object of the present invention to provide an actuating cylinder of the type described having an improved seal arrangement which mitigates the problems identified in a cost effective manner.

WO-A-9 215 474 discloses a cylinder according to the preamble of claim 1, in which the seal is surrounded by a seal cup.

Thus there is provided an actuating cylinder comprising a piston which is axially displaceable in sealed sliding contact with an associated bore to define a working chamber on one side of the piston, said cylinder being characterised in that the piston seal is made from plastics material which is radially outwardly biased against the associated bore by a resilient insert which is a forced fit into a recess in the piston.

In a preferred arrangement, the piston is made from plastics material and the piston seal is formed integrally with the piston.

Preferably, the associated cylinder bore is also made from plastics material.

In a preferred embodiment, the insert and recess may be of annular form.

The insert may be of elastomeric material or could be made from resilient metal.

Passage means may be provided to allow flow to the said one side of the piston from the other side thereof, flow through the passage means being controlled by a flap valve on the piston which is held closed by working pressure on said one side of the piston during each working stroke of the piston and which opens when the pressure on said one side of the piston falls below the pressure level on said other side of the piston. In an arrangement of this type, the flap valve may be incorporated in the insert.

In an actuating cylinder according to the invention, a diaphragm may be provided behind the piston on the other side from the said one side, which diaphragm defines an auxiliary hydraulic fluid containing chamber between the diaphragm and the seal of the piston.

There is also provided a hydraulic actuating system comprising one or more actuating cylinders according to the invention interconnected via conduit means.

Preferably, the system is for operation of a vehicle clutch and comprises a master cylinder and a slave cylinder interconnected via conduit means, characterised in that one or both of the master cylinder and the slave cylinder are actuating cylinders according to the invention.

In a preferred arrangement the master cylinder, slave cylinder and conduit are filled with hydraulic fluid prior to fitment on a motor vehicle, the system being transportable in this pre-filled condition to the location where it is to be fitted to the vehicle.

Preferably at least one hydraulic quick-connect coupling may be provided allowing the system to be transported in two or more pre-filled sections which can be connected by the quick-connect coupling(s) at the location where the system is to be fitted to the vehicle.

There is also provided a method of providing a pre-filled clutch actuating system on a vehicle comprising providing an actuating system of the form described above, filling the master cylinder, slave cylinder and conduit with hydraulic fluid, transporting the system to a location where it is to be fitted on the vehicle, fitting the system on the vehicle and operating the master cylinder to condition the system ready for use.

The present invention will now be described, by way of example only, with reference to the accompanying drawings In which:-
Figure 1 shows a clutch actuation system according to the present invention;
Figures 2 and 3 show the master and slave cylinders respectively of the system of Figure 1;
Figures 3A and 4 show details of the piston sealing and wear compensating valves used in the slave cylinder of Figures 1 and 3;
Figures 5 and 6 show alternative piston sealing and flap valve arrangements for use in a cylinder according to the present invention;
Figure 7 shows half of an alternative master cylinder design with a plastics bore.

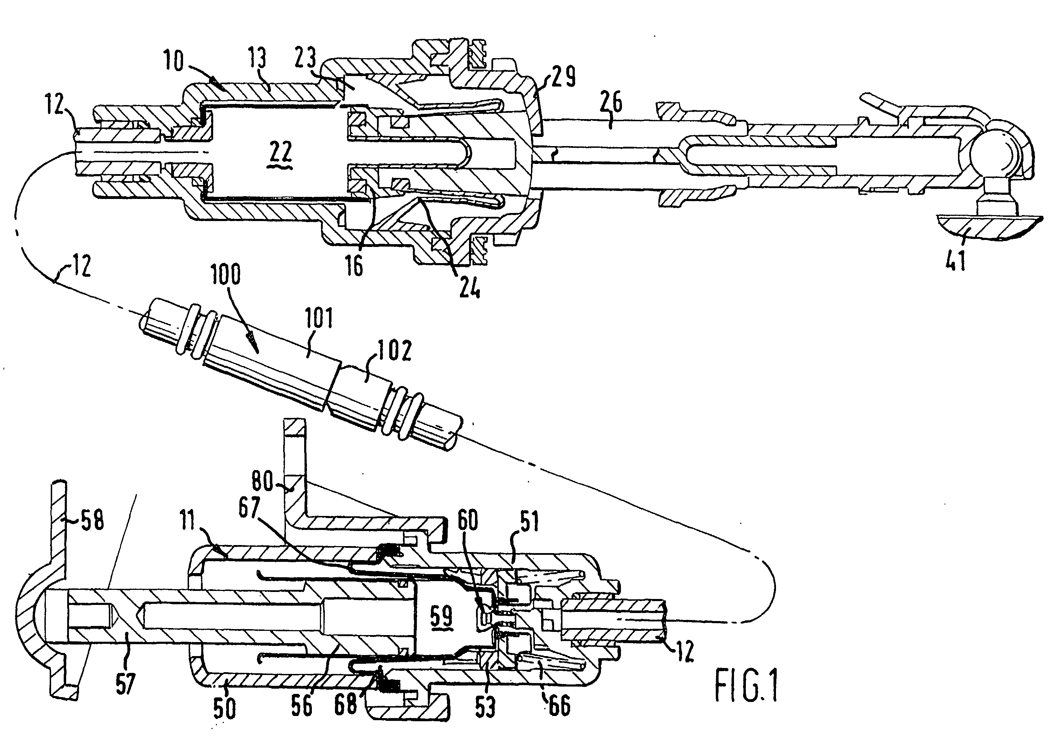

Referring to Figure 1 this shows an hydraulic clutch actuating system in the form of a master cylinder 10 interconnected with a slave cylinder 11 via a flexible conduit 12 with the cylinders in the clutch engaged position.

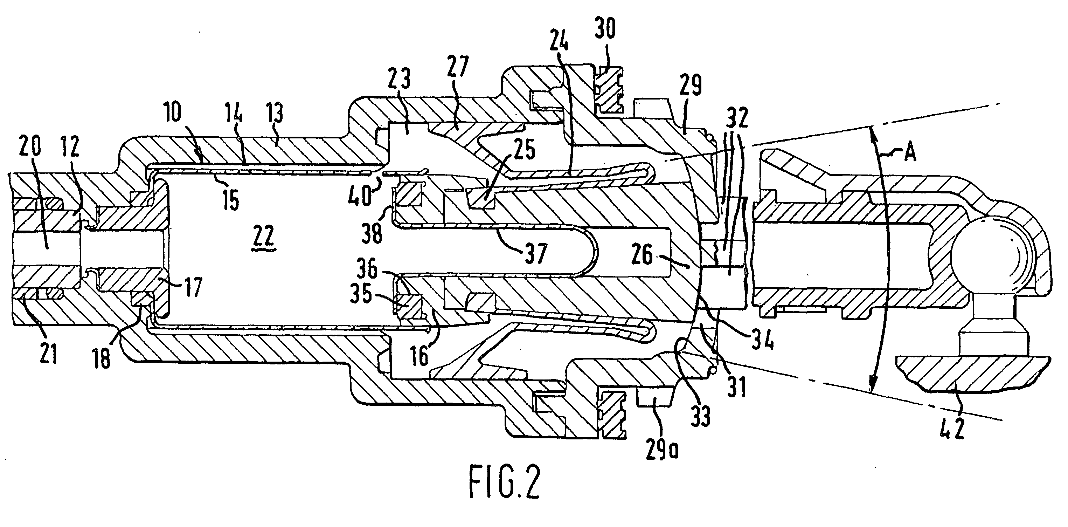

Referring to Figure 2 this shows the master cylinder 10 on a larger scale.

The master cylinder basically comprises a housing 13 made from plastics material such as a glass reinforced Nylon (e.g. Nylon 66 with 40% glass fibre reinforced) and which is provided with a stepped internal bore 14. Mounted within the bore 14 is a metal sleeve 15 within which a piston 16 is slideable. The sleeve is secured to housing 13 by a press fitting bushing 17 which compresses a sealing ring 18 between the sleeve and the housing.

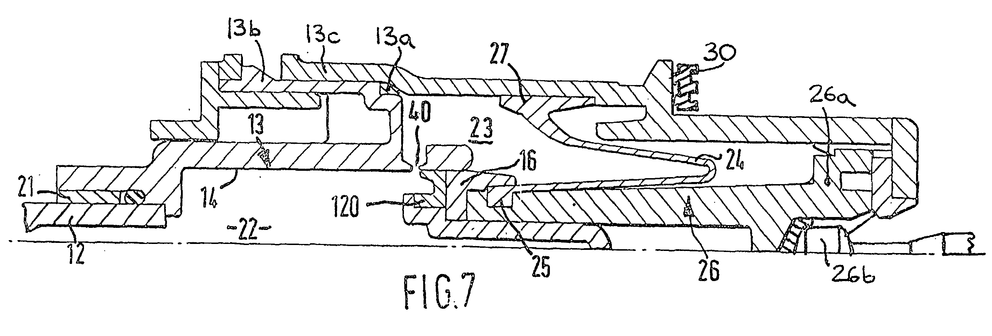

If desired sleeve 15 may be omitted and piston 16 may slide directly in plastics bore 14 (see Figure 7).

Bushing 17 surrounds an outlet 20 of the master cylinder in which one end of the flexible conduit 12 is retained by a serrated gripping sleeve 21.

Piston 16 defines a working chamber 22 in combination with the sleeve 15. Behind the piston 16 and on the other side from working chamber 22 is defined an auxilliary hydraulic chamber 23 which acts as the reservoir for the hydraulic actuating system. Chamber 23 is defined by rolling lobe diaphragm 24 the inner periphery 25 of which is trapped between piston 16 and an associated pushrod 26 and the outer periphery 27 of which slides on a larger diameter portion 28 of the stepped bore.

Housing 13 is completed by an end cap 29 which is secured to the remainder of the housing by ultra-sonic welding. The housing 13 is arranged to be supported in an aperture in an associated vehicle bulkhead (not shown) by a bayonet fastening arrangement of the type described in the Applicants earlier patent No. US-A-4488701. Part of this bayonet fastening is shown at 29a. A rubber seal 30 is arranged to be compressed between the housing and bulkhead to seal the bulkhead aperture and provide frictional grip to prevent disengagement of the bayonet fastening. The end cap has a cruciform apperture 31 the four limbs of which receive a respective one of the four ribs 32 provided on the sides of pushrod 26. The inner surface 33 of end cap 29 is part-spherical in form and this mates with a part-spherical surface 34 provided on the pushrod 26. The co-operation of these part-spherical surfaces and the cruciform apperture 31 with the ribs 32 allows the pushrod 26, and hence the associated piston 16, to pivot relative to the ball sleeve 15 in a generally arcuate manner as indicated by arrow A in figure 2.

Piston 16 is made from a flexible plastics material such as a polyammide (e.g. Nylon 12) and is radially outwardly biased into contact with sleeve 15 by an annular elastomeric insert 35 (such as EPDM rubber) which is a force fit in an annular recess 36 provided in the piston. A metal tube 37 with a radial extending flange 38 is a press fit down the centre of piston 16 and pushrod 26 to hold the piston and diaphragm 25 on the pushrod.

The sleeve 15 is provided with a recuperation port 40 which when the piston is fully retracted, as shown in figures 1 and 2, allows communication between the reservoir 23 and the working chamber 22.

The pushrod 26 is connected with a clutch pedal arm 41.

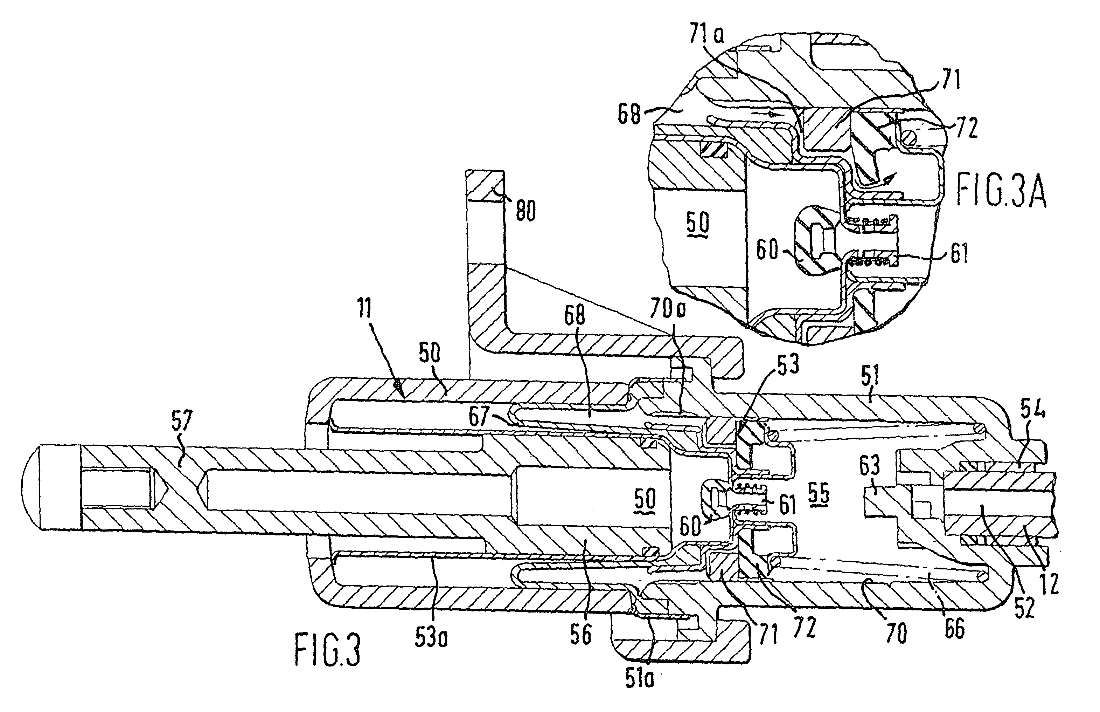

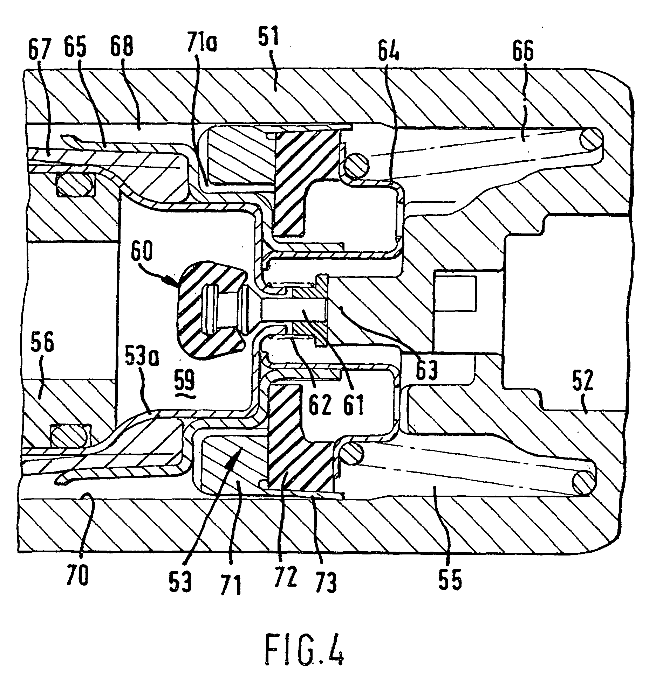

Figures 3 and 4 show details of the slave cylinder 11 on a larger scale. The slave cylinder comprises a two part housing 50, 51 in which the housing parts 50,51 which are made from the previously described glass fibre reinforced Nylon 66 and are held together by a bayonet fastening arrangement (not visible on the section shown). A main piston 53 slideable in housing part 51. The slave cylinder has an inlet 52 in which the other end of flexible conduit 12 is gripped by a serrated sleeve 54. Piston 53 together with housing part 51 defines a working chamber 55 of the slave cylinder.

Piston 53 includes a sheet metal tubular extension 53a in which a secondary piston 56 is axially slideable. Piston 56 includes an integral operating rod 57 which bears on one end of a clutch operating lever 58.

The secondary piston 56 defines in combination with tubular extension 53a a wear compensation chamber 59 which is placed in communication with the working chamber 55 when a valve member 60 carried by piston 53 is opened. The valve 60 is only opened when the main piston 53 is in its fully retracted position in which a valve stem 61 of the valve is displaced by a housing projection 63 to open the valve 60 against the action of light spring bias 62 (this is shown on a larger scale in figure 4).

As can also be most clearly seen from figure 4, the piston 53 includes further metal annular components 64 and 65 which are a press fit with each other when the piston is assembled. Component 64 receives biasing force from a main bias spring 66 which acts between the end of housing part 51 and the piston 53. Sheet metal part 65, which is a press fit on tubular extension 53a, retains the inner periphery of a rolling lobe diaphragm 67 in position relative to the piston 53. The outer periphery of the diaphragm is clamped between the two parts 50 and 51 of the housing. Diaphragm 67 thus defines an auxiliary hydraulic chamber 68 behind piston 53 which is full of hydraulic fluid.

Piston 53 makes a sealing contact with its co-operating bore 70 via a plastics (e.g. Nylon 12) sealing member 71 which is biased radially outwardly by an annular elastomeric (eg EPDM rubber) member 72 received in a recess 73 in the seal 71.

The slave cylinder 11 is secured to the clutch housing (not shown) by a mounting bracket 80 which is part of housing part 50.

The slave cylinder 11 is designed so that when the clutch is engaged the spring 66 applies the desired pre-load to the clutch operating mechanism via rod 57 to take-up all clearances in the mechanism. In this condition, when the spring 66 is applying the desired pre-load, the valve stem 61 does not make contact with the projection 63 so that valve 60 continues to seal the recuperation chamber 59 from the working chamber 55.

A quick-connect coulpling 100 is provided in the conduit 12. This coupling enables the system to be broken down into two pre-filled sections during transportation to the location where the system is to be installed on the vehicle. The two halves 101 and 102 of the coupling 100 serve as the two inlets into the two sections of the system through which the sections are filled with hydraulic fluid.

A suitable form of quick-connect coupling is described in the Applicants earlier patent No. GB-B-2195729 to which the reader is directed if further details of such couplings are required.

The assembly filling, transportation, installation and operation of the system described above will now be further described.

That section of the system which contains the master cylinder 10 and half 101 of the coupling is filled ready for transportation with the piston 16 fully retracted to the position shown in figure 1 thus maximising the volume of the working chamber 22 and the reservoir 23. The other section of the system which contains the slave cylinder 11 and half 102 of the coupling is filled with the secondary piston 56 in its fully retracted position (see figure 3) in which the wear compensation chamber 59 is of minimum volume. Both the master cylinder 10 and the slave cylinder 11 may be provided with transportation straps (not shown) which hold the pistons in the above described transportation positions. These straps are arranged to break on first use of the system after installation on the vehicle.

To fill the master cylinder 10 and the connected conduit, the associated half 101 of the coupling is connected with an evacuating and filling head (not shown) which first subjects the master cylinder, conduit and coupling half to a very high vacuum (eg 1mm of Mercury or less) to evacuate all air from the system section. During this evacuation it may be necessary to hold push-rod 26 out in order to maintain the piston 16 in the figure 1 and 2 position in which the working chamber 22 is at a maximum and the reservoir 23 is connected with the working chamber via recuperation port 40.

After the air evacuation the head connects a supply of hydraulic fluid to connector half 101 and a fixed volume of hydraulic fluid is introduced into the master cylinder, conduit and connector half. By admitting a predetermined volume of fluid into this section of the system the level of distortion of diaphragm 24 can be closely controlled as can the position taken up by the outer periphery 27 of the diaphragm in bore 28.

Similarly, to fill slave cylinder 11 and the other section of conduit, the other half 102 of the connector is connected with a similar evacuating and filling head (not shown). Because of the presence of valve 60 and the need to evacuate and fill wear compensation chamber 59 the evacuation and filling procedures are somewhat more Le detailed.

The initial stages of evacuation and filing of the slave cylinder must be carried out without housing part 50 in position so that tubular extension 53a can move further to the left then the position shown in figure 3 in which the right hand end of extension contacts the inside of housing part 50. With housing part 50 not in position diaphragm 67 is retained on housing part 51 by a metal annular ring 51a which also serves to hold the diaphragm in position and prevent twisting of the diaphragm when the two housing parts 50 and 51 are secured together by the bayonet fastening.

Initially on connection to a source of vacuum the working chambers 55 is evacuated and operating rod 57 is then depressed to cause valve stem 61 to contact projection 63 thus opening valve 60 and enabling compensation chamber 59 to be fully evacuated. Operating rod 57 is then released to allow valve 60 to close and to allow piston 53 to return to its figure 3 position under the action of spring 66.

Operating rod 57 is then pulled away from housing part 51 bringing with it piston extension 53a until seal 71 moves over axial grooves 70a in bore 70 thus placing auxilliary chamber 68 in communication with working chamber 55 and allowing complete evacuation of the auxiliary chamber 68. During this movement of operating rod 57 the friction between piston 56 and extension 53a maintains wear compensation chamber 59 at its minimum volume.

With the operating rod 57 held in this extended position the filling head is then switched over to supply hydraulic fluid under pressure through coupling half 102 to fill working chamber 55 and auxiliary chamber 18 via grooves 70a. The pressure of fluid supplied to working chamber 55 should not be so high as to distort diaphragm 67 and overfill auxiliary chamber 68.

When the auxiliary chamber 68 is filled operating rod 57 is pushed into the housing part 51 to close-off the grooves 70a. The wear compensation chamber can then be filled by increasing the pressure of the hydraulic fluid supplied to the slave cylinder so that the fluid pressure opens valve 60 against the action of light spring 62. Alternatively, operating rod 57 can be fully pushed into housing part 51 so that projection 63 opens valve 60 to allow filling of chamber 59.

With the filling head still connected to the source of hydraulic fluid the operating rod 57 is now pushed into the housing part 51 to approximately the position shown in figure 3 and the housing part 50 is then secured in position using the bayonet fastening. The volume of fluid expelled from working chamber 55 when the operating rod 57 is pushed into body part 51 exits from the coupling half 102 and returns to the connected hydraulic supply.

This completes the filling of the systen halves which can now be transported in this pre-filled condition to the location where they are to be fitted on the vehicle.

Once the two halves of the system has been fitted to a vehicle and interconnected via the coupling the first operation of the master cylinder piston 16 is arranged to force fluid through the conduit 12 into working chamber 55 of the slave cylinder and hence through the valve 60 into wear compensation chamber 59 so that the secondary piston 56 is fully extended and contacts the associated clutch operating lever 58 to ready the system for subsequent use.

It is likely that the initial extension of secondary piston 56 will overstroke the operating lever 58 so that when the clutch pedal 41 is released after the initial operation of the master cylinder, the slave cylinder pistons will be fully retracted under the action of the lever 58 so that valve 60 is opened by projection 63 and the secondary piston moves to the right, as viewed in figure 3, reducing the volume of compensation chamber 59 until the spring 66 applies only the desired pre-load on the lever 58. In this condition valve 69 will be closed and valve stem slightly spaced from projection 63 with the master cylinder also in the figure 1 position.

To disengage the clutch the pedal 41 is depressed thus displacing master cylinder piston 16 along bore sleeve 15 hence forcing hydraulic fluid through the conduit 12 and into the working chamber 55 of the slave cylinder to axially displace the main slave cylinder piston 53 and hence move the clutch operating lever 58 via the operating rod 57 of the slave cylinder.

Eventually the driven plate of the associated clutch will have worn sufficiently for the clutch release lever 58 to occupy a position slightly to the right of that shown in figure 1 when the clutch is engaged. In the slightly worn condition of the driven plate the end loading on operating rod 57 overcomes the main bias spring 66 of the slave cylinder to unseat the valve 60 by contact of the valve stem 61 with the projection 63. This allows a small amount of fluid to leave the wear compensation chamber 59 and enter the working chamber 55 of the slave cylinder thus allowing the secondary piston to move slightly to the right relative to the associated tubular extension 51a of piston 53. This displacement of the secondary piston 56 reduces the end loading on the operating rod 57 hence allowing the main bias spring 66 to restore the desired pre-load on the lever 58 and move valve stem 61 out of contact with the projection 53 thus closing off the communication between the wear compensation chamber 59 and the working chamber 55.

Hence throughout the wear life of the clutch the valve 60 is periodically unseated to allow the wear compensation chamber 59 to decrease in volume so that the secondary piston gradually moves to the right from its fully extended position to its fully retracted position shown in figure 3. By means of this adjustment the operative position of the clutch release lever 58 is kept substantially at the initial start position shown in figure 1.

An hydraulic actuating system for the operation of a clutch having a wear compensation arrangement in accordance with the above description is disclosed and claimed in our co-pending European Patent Application No- 95 913 126.9.

As can be seen from figure 3A and figure 4, the elastomeric insert 72 used in the main piston 53 of the slave cylinder acts as a flap valve which allows communication between the auxiliary hydraulic chamber 68 and the working chamber 55 via passages 71a in seal 71 on the return stroke of the main piston 53 when the pressure of fluid in the auxiliary chamber 68 is higher than that in the working chamber 55. The flap valve is designed to avoid the pressure in the auxilliary chamber rising substantially above 1 bar. Both the master cylinder and the slave cylinder, by the provision of auxiliary chambers 23 and 68 behind the associated main pistons 16 and 53, provide an actuating system which is particularly fluid tight since any fluid leaking past the main pistons 16 and 53 is caught by the auxiliary chambers 23 and 68. Also any tendency for air ingress due to rapid return of the main pistons 16 and 53 is prevented since any fluid drawn into the working chambers 22 and 55 on such a rapid return stroke will be hydraulic fluid and not air.

Additionally the master cylinder is of a particularly compact and efficient construction which does not require an external reservoir since the chamber 23 contains sufficient fluid to accomodate the operating requirements of the system throughout its design life. If desired, however, an external reservoir could be connected to chamber 23.

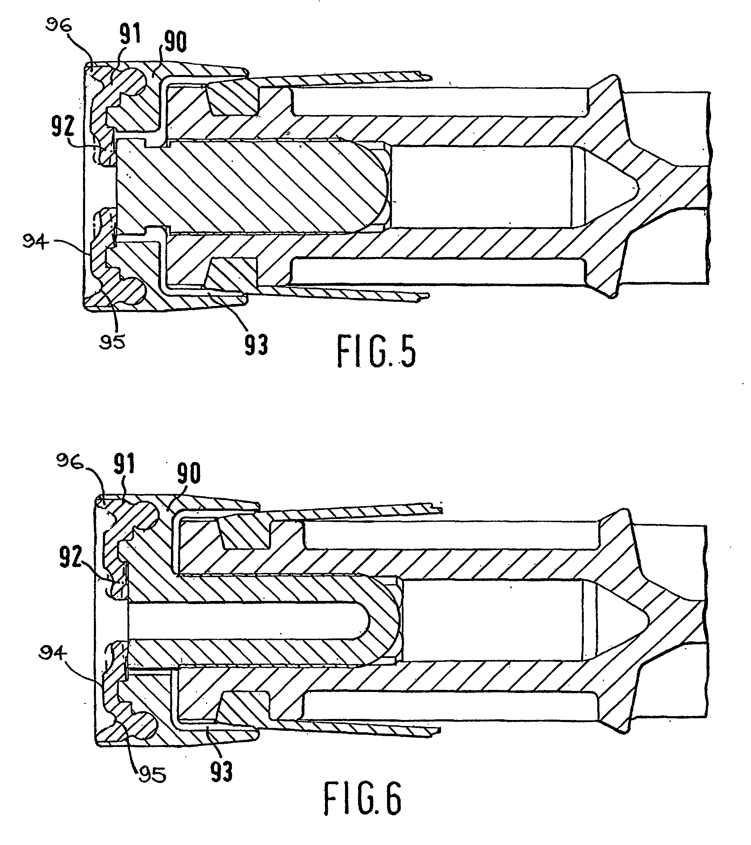

Figures 5 and 6 show alternative piston sealing arrangements suitable for use in the master cylinder 10 ( and also with suitable adaptation in the slave cylinder 11). In both figures 5 and 6 plastics piston seals 90 are radially outwardly biased into contact with an associated bore (not shown) by an elastomeric insert 91 which includes a flap valve portion 92 which controls the flow of fluid from the right hand side of the piston to the left hand side of the piston via a recuperation passage 93. The side 94 of insert 91 exposed to the working chamber pressure is recessed at 95 to provide a peripheral lip 96 which bears against seal 90.

This concept of a piston with a flexible plastics seal energised by an elastomeric insert is applicable to hydraulic cylinders other than the master and slave cylinders described above. Also the use of a flap valve built into the energising elastomeric material has wider applications in hydraulic cylinders in general where control of recuperation etc. is required.

It has been found that the use of a relatively rigid but flexible plastics seal material greatly reduces the stick-slip effect in plastics bores ad the consequent seal squeak and judder as compared to a rubber seal operating in a plastics bore.

Also, although in all the sealing arrangements described above the flexible plastics seal is energised by an elastomeric insert it will be appreciated that other forms of resilient insert can be used. For example, a circumferentially extending but radially resilient spring coil.

Figure 7 shows an alternative master cylinder which does not use the metal sleeve 15 shown in figures 1 and 2 and also shows the piston 16 sealed by a cup-seal 120.

Alternatively in accordance with the present invention piston 16 may have a plastics sealing portion which is biased radially outwardly by an elastomeric insert.

In the Figure 7 construction the housing 13 is split at the opposite end from the construction shown in Figure 2 with the auxiliary chamber 23 sealed by a seal 13a which acts between housing portions 13b and 13c. Also pushrod 26 includes a portion 26 which is guided within housing portion 13c and a ball joint 26b which provides the necessary articulation.

## Claims

1. An actuating cylinder comprising a piston (16, 53) which is axially displaceable in sealed sliding contact with an associated bore (15, 70) to define a working chamber (22, 55) on one side of the piston, said cylinder being **characterised in that** the piston seal (16, 71) is made from plastics material which is radially outwardly biased against the associated bore by a resilient insert (35, 72) which is a forced fit in a recess (36, 73) in the piston.

2. A cylinder according to claim 1 in which the piston (16, 53) is made of plastics material and the piston seal (16, 71) is formed integrally with the piston.

3. A cylinder according any of claims 1 or 2 in which the bore (14, 70) is also made from plastics material.

4. A cylinder according to any one of claims 1 to 3 in which the insert (35, 72) and recess (36, 73) are of annular form.

5. A cylinder according to any one of claims 1 to 4 in which passage means (71a, 93) are provided to allow flow to the said one side of the piston ( 53) from the other side thereof, flow through the passage means being controlled by a flap valve (72, 92) on the piston which is held closed by working pressure on said one side of the piston during each working stroke of the piston and which opens when the pressure on said one side of the piston falls below the pressure level on said other side of the piston.

6. A cylinder according to claim 5 in which the insert (72, 91) incorporates the flap valve (92).

7. A cylinder according to any one of claims 1 to 6 in which the insert (35, 72, 92) is made from elastomeric material.

8. A cylinder according to any one of claims 1 to 6 in which the insert is made from resilient metal.

9. A cylinder according to any one of claims 1 to 8 in which the insert (91) is recessed (95) on its side (94) exposed to working chamber pressure to provide a peripheral lip (96) which bears against the seal (90).

10. A cylinder according to any of claims 1 to 9 in which a diaphragm (24,67) is provided behind the piston (16, 53) on the other side from the said one side, which diaphragm defines an auxiliary hydraulic fluid containing chamber (23, 68) between the diaphragm and the seal of the piston.

11. A hydraulic actuating system comprising one or more actuating cylinders (10, 11) according to any of claims 1 to 10 in which the cylinders are interconnected via conduit means (12).

12. A system according to claim 11 for the operation of a vehicle clutch comprising a master cylinder (10) and a slave cylinder (11) interconnected via conduit means (12), **characterised in that** one or both of the master cylinder and the slave cylinder are constructed in accordance with any of claims 1 to 9.

13. A system according to claim 12 **characterised in that** the master cylinder (10), slave cylinder (11) and conduit means (12) are filled with hydraulic fluid prior to fitment on a motor vehicle, the system being transportable in this pre-filled condition to the location where it is to be fitted to the vehicle.

14. A system according to claim 13 including at least one hydraulic quick-connect coupling (100) allowing the system to be transported in two or more pre-filled sections which can be connected by the quick-connect coupling(s) at the location where the system is to be fitted to the vehicle.

15. A method of providing a pre-filled clutch actuating system on a vehicle comprising providing an actuating system according to either of claims 12 or 13, filling the master cylinder (10), slave cylinder (11) and conduit means (12) with hydraulic fluid, transporting the system to a location where it is to be fitted on the vehicle, fitting the system on the vehicle and operating the master cylinder to condition the system ready for use.

## Patentansprüche

1. Betätigungszylinder mit einem Kolben (16, 53), der in abgedichtetem Gleitkontakt mit einer zugehörigen Bohrung (15, 70) axial verschiebbar ist, um eine Arbeitskammer (22, 55) auf einer Seite des Kolbens zu bilden, wobei der Zylinder **dadurch gekennzeichnet ist, daß** die Kolbendichtung (16, 71) aus einem Kunststoff hergestellt ist, der gegen die zugehörige Bohrung von einem federnd nachgiebigen Einsatzstück (35, 72) radial nach außen vorgespannt ist, das einen Festsitz in einer Ausnehmung (36, 73) in dem Kolben hat.

2. Zylinder nach Anspruch 1, bei dem der Kolben (16, 53) aus einem Kunststoff hergestellt ist und die Kolbendichtung (16, 71) einstückig mit dem Kolben ausgebildet ist.

3. Zylinder nach einem der Ansprüche 1 oder 2, bei dem die Bohrung (14, 70) auch aus Kunststoff hergestellt ist.

4. Zylinder nach einem der Ansprüche 1 bis 3, bei dem das Einsatzstück (35, 72) und die Ausnehmung (36, 73) Kreisringform haben.

5. Zylinder nach einem der Ansprüche 1 bis 4, bei dem ein Durchgang (71a, 93) vorgesehen ist, um eine Strömung zu der einen Seite des Kolbens (53) von dessen anderen seite zuzulassen, wobei die Strömung durch den Durchgang von einem Klappenventil (72, 92) an dem Kolben gesteuert wird, das durch den Arbeitsdruck auf der einen seite des Kolbens während eines jeden Arbeitshubes des Kolbens geschlossen gehalten wird, und das sich öffnet, wenn der Druck auf der einen Seite des Kolbens unter das Druckniveau auf der anderen Seite des Kolbens fällt.

6. Zylinder nach Anspruch 5, bei dem das Einsatzstück (72, 91) das Klappenventil (92) beinhaltet.

7. Zylinder nach einem der Ansprüche 1 bis 6, bei dem das Einsatzstück (35, 72, 92) aus einem elastomeren Material hergestellt ist.

8. Zylinder nach einem der Ansprüche 1 bis 6, bei dem Einsatzstück aus einem federnd nachgiebigen Metall hergestellt ist.

9. Zylinder nach einem der Ansprüche 1 bis 8, bei dem das Einsatzstück (91) auf seiner Seite (94), die dem Arbeitskammerdruck ausgesetzt ist, vertieft ist, um eine Randlippe (96) zu bilden, die an der Dichtung (90) anliegt.

10. Zylinder nach einem der Ansprüche 1 bis 9, bei dem eine Membran (24, 67) hinter dem Kolben (16, 53) auf der anderen Seite von der einen Seite vorgesehen ist, wobei die Membran eine zusätzliche Hydraulikflüssigkeit enthaltende Kammer (23, 68) zwischen der Membran und der Dichtung des Kolbens bildet.

11. Hydraulisches Betätigungssystem mit einem oder mehreren Betätigungszylindern (10, 11) gemäß einem der Ansprüche 1 bis 10, bei dem die Zylinder über Leitungsmittel (12) miteinander verbunden sind.

12. System nach Anspruch 11, für den Betrieb einer Fahrzeugkupplung mit einem Geberzylinder (10) und einem Mehmerzylinder (11), die über Leitungsmittel (12) miteinander verbunden sind, **dadurch gekennzeichnet, daß** einer der Zylinder oder sowohl der Geberzylinder als auch der Nehmerzylinder in Einklang mit einem der Ansprüche 1 bis 10 ausgeführt ist.

13. System nach Anspruch 12, **dadurch gekennzeichnet, daß** der Geberzylinder (10), der Nehmerzylinder (11) und die Leitungsmittel (12) mit Hydraulikflüssigkeit vor ihrer Montage an einem Kraftfahrzeug gefüllt werden, wobei das System in diesem vorgefüllten zustand an den Ort, an dem es an das Fahrzeug montiert wird, transportierbar ist.

14. System nach Anspruch 13, einschließlich mindestens einer hydraulischen Schnellkupplung (100), die es gestattet, das System in zwei oder mehr als zwei vorgefüllten Abschnitten zu transportieren, die mit der Schnellkupplung oder den Schnellkupplungen an dem Ort miteinander verbunden werden können, an dem das System an das Fahrzeug zu montieren ist.

15. Verfahren zum Bereitstellen eines vorgefüllten Kupplungebetätigungssystems an einem Fahrzeug, mit Bereitstellen eines Betätigungssystems gemäß einem der Ansprüche 13 oder 14, Befüllen des Geberzylinders (10), des Nehmerzylinders (11) und den Leitungsmitteln (12) mit Hydraulikflüssigkeit, Transportieren des Systems zu einem Ort, an dem es an das Fahrzeug zu montieren ist, Montieren des Systems an das Fahrzeug und Betätigen das Geberzylinders, um das System in einen Zustand zu bringen, in dem es gebrauchsbereit ist.

## Revendications

1. Cylindre d'actionnement comprenant un piston (16, 53) qui peut être déplacé axialement en contact étanche par coulissement avec un alésage associé (15, 70) afin de définir une chambre de travail (22, 55) d'un côté du piston, ledit cylindre étant **caractérisé en ce que** le joint de piston (16, 71) est réalisé à partir d'une matière plastique qui est appliquée radialement vers l'extérieur contre l'alésage associé par un insert élastique (35, 72) qui est monté serré dans un évidement (36, 73) dans le piston.

2. Cylindre selon la revendication 1, dans lequel le piston (16, 53) est réalisé en matière plastique et le joint de piston (16, 71) est formé d'un seul tenant avec le piston.

3. Cylindre selon l'une quelconque des revendications 1 ou 2, dans lequel l'alésage (14, 70) est également réalisé à partir d'une matière plastique.

4. Cylindre selon l'une quelconque des revendications 1 à 3, dans lequel l'insert (35, 72) et l'évidement (36, 73) ont une forme annulaire.

5. Cylindre selon l'une quelconque des revendications 1 à 4, dans lequel des moyens de passage (71a, 93) sont prévus afin de permettre un écoulement vers ledit premier côté du piston (53) depuis l'autre côté de celui-ci, l'écoulement à travers les moyens de passage étant commandé par un clapet de non-retour (72, 92) sur le piston qui est maintenu fermé par une pression de fonctionnement dudit premier côté du piston pendant chaque course de fonctionnement du piston et qui s'ouvre lorsque la pression, dudit premier côté du piston tombe au-dessous du niveau de pression dudit autre côté du piston.

6. Cylindre selon la revendication 5, dans lequel l'insert (72, 91) incorpore le clapet de non-retour (92).

7. Cylindre selon l'une quelconque des revendications 1 à 6, dans lequel l'insert (35, 72, 92) est réalisé à partir d'un élastomère.

8. Cylindre selon l'une quelconque des revendications 1 à 6, dans lequel l'insert est réalisé à partir d'un métal élastique.

9. Cylindre selon l'une quelconque des revendications 1 à 8, dans lequel l'insert (91) est évidé (95) sur son côté (94) exposé à la pression de chambre de travail afin de réaliser une livre périphérique (96) qui repose contre le joint (90).

10. Cylindre selon l'une quelconque des revendications 1 à 9, dans lequel une membrane (24, 67) est prévue derrière le piston (16, 53) de l'autre côté par rapport audit premier côté, laquelle membrane définit une chambre contenant un fluide hydraulique auxiliaire (23, 68) entre la membrane et le joint du piston.

11. Système d'actionnement hydraulique comprenant un ou plusieurs cylindres d'actionnement (10, 11) selon l'une quelconque des revendications 1 à 10, dans lequel les cylindres sont reliés les uns aux autres par l'intermédiaire de moyens formant conduit (12).

12. Système selon la revendication 11 pour la commande d'un embrayage de véhicule comprenant un maître-cylindre (10) et un cylindre récepteur (11) reliés l'un à l'autre par l'intermédiaire de moyens formant conduit (12), **caractérisé en ce que** l'un du maître-cylindre et du cylindre récepteur ou les deux sont réalisés conformément à l'une quelconque des revendications 1 à 10.

13. Système selon la revendication 12, **caractérisé en ce que** le maître-cylindre (10), le cylindre récepteur (11) et les moyens formant conduit (12) sont remplis de fluide hydraulique avant montage sur un véhicule à moteur, le système étant transportable dans cet état prérempli jusqu'au lieu où il doit être monté sur le véhicule.

14. Système selon la revendication 13, comprenant au moins un raccord hydraulique rapide (100) permettant le transport du système en deux sections préremplies ou plus qui peuvent être raccordées par le ou les raccords rapides sur le lieu où le système doit être monté sur le véhicule.

15. Procédé de réalisation d'un système d'actionnement d'embrayage prérempli sur un véhicule, comprenant la réalisation d'un système d'actionnement conformément à l'une ou l'autre des revendications 13 ou 14, le remplissage du maître-cylindre (10), du cylindre récepteur (11) et des moyens formant conduit (12) avec un fluide hydraulique, le transport du système jusqu'au lieu où il doit être monté sur le véhicule, le montage du système sur le véhicule et l'actionnement du maître-cylindre dans l'état où le système est prêt pour utilisation.
